# EUROPÄISCHE PATENTANMELDUNG

(11) **EP 4 050 699 A2**
(43) Veröffentlichungstag der Anmeldung: **31.08.2022**
(21) Anmeldenummer: 22155953.7
(22) Anmeldetag: 09.02.2022
(51) Int. Cl.: H01M 10/48, H01M 50/244

(54) **ENERGIESPEICHERSYSTEM UND KRAFTFAHRZEUG**

(30) Priorität: 26.02.2021 DE 102021104712
(71) Anmelder: VOLKSWAGEN AG, 38440 Wolfsburg (DE)
(72) Erfinder: Lackenmacher, Lutz, 38531 Rötgesbüttel (DE); Hennig, Jakob, 38124 Braunschweig (DE); Wesche, Frank, 38458 Velpke (DE); Arndt, Carolin, 38114 Braunschweig (DE)
(74) Vertreter: Bals & Vogel Patentanwälte PartGmbB

(57) **Zusammenfassung**

Die vorliegende Erfindung betrifft ein Energiespeichersystem (10), umfassend wenigstens eine Speichervorrichtung (12) zur Speicherung von elektrischer Energie, einen Grundkörper (14) zur Aufnahme von der wenigstens einen Speichervorrichtung (12), wenigstens ein Deformationselement (20), wenigstens ein Kontaktelement (30) und eine Erfassungsvorrichtung (40) zur Erfassung einer Deformation des Deformationselements (20), wobei das wenigstens eine Deformationselement (20) und das wenigstens ein Kontaktelement (30) zumindest bereichsweise gemeinsam an einer Außenseite des Grundkörpers (14) angeordnet sind, wobei die Erfassungsvorrichtung (40) elektrisch leitend mit dem wenigstens einen Deformationselement (20) und/oder dem wenigstens einen Kontaktelement (30) verbunden und zur Erfassung eines Grades der Deformation des wenigstens einen Deformationselements (20) ausgestaltet ist, wobei der Grad der Deformation des wenigstens einen Deformationselements (20) bei einer Kontaktierung zwischen dem wenigstens einen Deformationselement (20) und dem wenigstens einen Kontaktelement (30) mit einer Erfassung eines elektrischen Widerstands durch die Erfassungsvorrichtung (40) erfassbar ist. Ferner betrifft die Erfindung ein Kraftfahrzeug (100) mit einem Energiespeichersystem (10).

## Beschreibung

Die vorliegende Erfindung betrifft ein Energiespeichersystem, insbesondere für ein Kraftfahrzeug, mit einer Erfassungsvorrichtung zur Erfassung eines Grades einer Deformation. Auch betrifft die Erfindung ein Kraftfahrzeug mit einem Energiespeichersystem.

Energiespeichersysteme, insbesondere für ein Kraftfahrzeug, sind empfindlich gegenüber äußeren Krafteinwirkungen. Bei Kraftfahrzeugen sind die Energiespeichersysteme zumeist im Kraftfahrzeugboden untergebracht und es kann folglich zu Aufsetzern oder anderen mechanischen Belastungen einer Außenseite des Energiespeichersystems im Kraftfahrzeugbetrieb kommen. Wird dabei beispielsweise eine Außenseite des Energiespeichersystems durch Deformation, Bruch oder Intrusion beschädigt, kann dieses eine Funktionsstörung oder einen Ausfall des Batteriesystems verursachen. Schlimmstenfalls kommt es zu Beschädigungen innerhalb der Batterie und an den Zellen, wodurch die Batterie in einen unsicheren Zustand gebracht wird und eine Gefahr für Isolationsverletzung und/oder Feuer erhöht wird.

Der Nutzer eines Kraftfahrzeugs bemerkt nicht zwangsläufig wenn die Batterie einer ungewöhnlich hohen mechanischen Belastung von beispielsweise unten ausgesetzt wurde. Wird das Kraftfahrzeug zwischen mehreren Nutzern geteilt, können sich Risiken ergeben, wenn Informationen über Schäden nicht protokolliert werden. Generell ergibt sich eine unklare Wartungs- und/oder Reparatursituation, da entweder die Batterie ausgetauscht wird, obwohl sie nicht beschädigt worden ist und weiterhin sicher funktionieren würde oder die Batterie wird nicht ausgetauscht, da sie keine sichtbaren und/oder keine erheblichen Schäden zeigt, obwohl sie punktuell kritisch belastet worden ist und somit ein Sicherheitsrisiko darstellt.

Bekannte Erkennungssysteme für Deformationen einer Batterie für ein Kraftfahrzeug aus beispielsweise der DE 10 2013 006 809 A1 ermöglichen lediglich eine Erkennung, ob eine Beschädigung an der Batterie erfolgt ist oder nicht und lassen keine Aussage über einen Grad der Beschädigung zu.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, ein Energiespeichersystem, insbesondere für ein Kraftfahrzeug, bereitzustellen, mit dem eine Erfassung eines Grades einer Deformation besonders einfach ermöglicht wird.

Insbesondere ist es ferner die Aufgabe der Erfindung ein Kraftfahrzeug mit einem entsprechenden Energiespeichersystem bereitzustellen.

Die voranstehende Aufgabe wird durch die Patentansprüche gelöst. Insbesondere wird die Aufgabe gelöst durch ein Energiespeichersystem mit den Merkmalen des unabhängigen Anspruchs 1. Ferner wird die Aufgabe gelöst durch ein Kraftfahrzeug mit den Merkmalen des unabhängigen Anspruchs 10. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Energiespeichersystem beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird, beziehungsweise werden kann.

Gemäß einem ersten Aspekt der Erfindung wird die Aufgabe gelöst durch ein Energiespeichersystem, insbesondere für ein Kraftfahrzeug, besonders bevorzugt für ein zumindest teilweise elektrisch angetriebenes Kraftfahrzeug, das Energiespeichersystem umfasst wenigstens eine Speichervorrichtung zur Speicherung von elektrischer Energie, einen Grundkörper zur Aufnahme von der wenigstens einen Speichervorrichtung, wenigstens ein Deformationselement, wenigstens ein Kontaktelement und eine Erfassungsvorrichtung zur Erfassung einer Deformation des wenigstens einen Deformationselements, wobei das wenigstens eine Deformationselement und das wenigstens eine Kontaktelement zumindest bereichsweise gemeinsam an einer Außenseite des Grundkörpers angeordnet sind, wobei die Erfassungsvorrichtung elektrisch leitend mit dem wenigstens einen Deformationselement und/oder dem wenigstens einen Kontaktelement verbunden und zur Erfassung eines Grades der Deformation des wenigstens einen Deformationselements ausgestaltet ist, wobei der Grad der Deformation des wenigstens einen Deformationselements bei einer Kontaktierung zwischen dem wenigstens einen Deformationselement und dem wenigstens einen Kontaktelement mit einer Erfassung eines elektrischen Widerstands durch die Erfassungsvorrichtung erfassbar ist.

Der Erfindung liegt das Prinzip zu Grunde, dass bei Kontaktierung des wenigstens einen Deformationselements und des wenigstens einen Kontaktelements beispielsweise ein elektrischer Kreis oder Stromkreis geschlossen wird und folglich durch die Erfassungsvorrichtung eine Deformation des Deformationselements erfasst wird. Bevorzugt kontaktieren sich das wenigstens eine Kontaktelement und das wenigstens eine Deformationselement im Grundzustand nicht. Besonders bevorzugt sind das wenigstens eine Kontaktelement und das wenigstens eine Deformationselement im Grundzustand sogar mit einer Isolierung aus einem Isoliermaterial und/oder Luft gegeneinander elektrisch isoliert. Als Grundzustand wird im Rahmen der Erfindung ein unbeschädigter Zustand des Energiespeichersystems ohne äußere Krafteinwirkung verstanden, sodass sowohl das wenigstens eine Kontaktelement als auch das wenigstens eine Deformationselement unverformt und damit nicht deformiert sind. Die Deformation des Deformationselements erlaubt weiterführend eine Schlussfolgerung auf eine äußere Krafteinwirkung. Je nach Größe der äußeren Krafteinwirkung, wird das wenigstens eine Deformationselement ab einer Kontaktierung mit dem wenigstens einen Kontaktelement mehr oder weniger deformiert und verändert dabei die Kontaktierungsfläche und somit den elektrischen Widerstand des Übergangs zwischen dem wenigstens einen Kontaktelement und dem wenigstens einen Deformationselement. Ein derart ausgestaltetes Energiespeichersystem ist besonders vorteilhaft, da die Erfassung des Grades der Deformation des wenigstens einen Deformationselements stufenlosen oder im Wesentlichen stufenlos besonders einfach und kostengünstig ermöglicht wird. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende, beabsichtigte Funktion des Merkmals zu verändern. Die Erfassung eines Grades der Deformation des wenigstens einen Deformationselements ist im Rahmen der Erfindung derart zu verstehen, dass wenigstens zwei Abstufungen, insbesondere bevorzugt eine Vielzahl an Abstufungen, von Deformationen des wenigstens einen Deformationselements erfassbar sind, wobei "keine Deformation" nicht als eine der wenigstens zwei Abstufungen zu verstehen ist. Die wenigstens zwei erfassbaren Abstufungen der Deformation des wenigstens einen Deformationselements beschreiben jeweils eine Deformation des wenigstens einen Deformationselements. Bevorzugt ist das Energiespeichersystem, insbesondere die Erfassungsvorrichtung, mit einem Steuergerät und/oder einem Boardnetz eines Kraftfahrzeugs verbunden. Ein beschriebener Stromkreis des wenigstens einen Kontaktelements und des wenigstens einen Deformationselements ist bevorzugt als Niedervolt-Stromkreis, insbesondere mit 12 V oder 48 V, ausgestaltet.

Bevorzugt begrenzt und/oder umgibt der Grundkörper die wenigstens eine Speichervorrichtung zumindest abschnittsweise. Beispielhaft ist der Grundkörper als ein Gehäuse für die wenigstens eine Speichervorrichtung ausgestaltet. Die Erfassungsvorrichtung ist elektrisch leitend mit dem wenigstens einen Deformationselement und/oder dem wenigstens einen Kontaktelement verbunden, sodass bevorzugt ein elektrisches Potential zwischen dem wenigstens einen Deformationselement und dem wenigstens einen Kontaktelement anliegt. Eine Kontaktierung zwischen dem wenigstens einen Deformationselement und dem wenigstens einen Kontaktelement schließt folglich einen Kreislauf und/oder ermöglicht einen Stromfluss über das wenigstens eine Deformationselement und/oder das wenigstens einen Kontaktelement, was wiederum von der Erfassungsvorrichtung mittels einer Erfassung eines elektrischen Widerstands erfassbar ist. Bevorzugt kann das wenigstens eine Deformationselement und/oder das wenigstens einen Kontaktelement an dem Grundkörper angeordnet sein. Besonders bevorzugt sind das wenigstens eine Deformationselement und das wenigstens eine Kontaktelement in einen Unterbodenschutz eines Kraftfahrzeugs integriert. Das wenigstens eine Deformationselement und das wenigstens eine Kontaktelement können aus gleichen oder unterschiedlichen Materialien ausgestaltet sein. Das wenigstens eine Deformationselement und das wenigstens eine Kontaktelement sind zumindest abschnittsweise elektrisch leitfähig, bevorzugt vollständig elektrisch leitfähig. Vorteilhaft ist das wenigstens eine Deformationselement aus einem weicheren Material als das wenigstens eine Kontaktelement hergestellt. Alternativ oder zusätzlich ist das wenigstens eine Deformationselement bevorzugt durch seine konstruktive Ausgestaltung leichter zu deformieren als das wenigstens eine Kontaktelement, sodass das wenigstens eine Kontaktelement bei der Kontaktierung mit dem wenigstens einen Deformationselement weniger oder nicht oder im Wesentlichen nicht deformiert wird. Anschaulich formuliert deformiert sich das wenigstens eine Deformationselement somit vorzugsweise an dem sich nicht oder im Wesentlichen nicht deformierenden Kontaktelement, wobei sich durch die Deformation die Kontaktfläche zwischen dem wenigstens einen Deformationselement und dem wenigstens einen Kontaktelement vergrößert und wobei sich der elektrische Widerstand des Übergangs zwischen dem wenigstens einen Deformationselement und dem wenigstens einen Kontaktelement folglich verkleinert. Bei einer Vielzahl von Deformationselementen ergibt sich die Vergrößerung der Kontaktfläche folglich bevorzugt aus mehreren Übergängen zwischen mehreren Deformationselementen und dem wenigstens einen Kontaktelement.

Gemäß einer bevorzugten Weiterentwicklung der Erfindung kann bei einem Energiespeichersystem vorgesehen sein, dass die Erfassungsvorrichtung zur strombasierten und/oder zur spannungsbasierten Erfassung der Deformation des Deformationselements und/oder Erfassung des elektrischen Widerstands ausgestaltet ist. Im Rahmen der Erfindung ist sowohl eine strombasierte Erfassung, als auch eine spannungsbasierte Erfassung der Deformation des Deformationselements und/oder Erfassung des elektrischen Widerstands des Übergangs zwischen dem wenigstens einen Kontaktelement und dem wenigstens einen Deformationselement möglich. Die Widerstandserfassung kann direkt oder indirekt erfolgen.

Gemäß einer bevorzugten Weiterentwicklung der Erfindung kann bei einem Energiespeichersystem vorgesehen sein, dass die Erfassungsvorrichtung wenigstens zwei Deformationselemente umfasst, wobei die wenigstens zwei Deformationselemente in wenigstens zwei Lagen angeordnet sind. Eine Lage ist dabei insbesondere als ein Ebene zu verstehen, wobei die wenigstens zwei Lagen bevorzugt parallel zueinander angeordnet sind. Eine Anordnung von wenigstens zwei Deformationselementen in wenigstens zwei Lagen ermöglicht vorteilhaft eine Erfassung von unterschiedlichen Graden der Deformation, da für die Kontaktierung der wenigstens zwei Deformationselemente in den wenigstens zwei Lagen unterschiedliche äußere Krafteinwirkungen erforderlich sind, um eine Kontaktierung mit dem wenigstens einen Kontaktelement zu erzeugen. Ein derart ausgestaltetes Energiespeichersystem ist besonders vorteilhaft, da eine Erfassung eines Grades einer Deformation besonders einfach und kostengünstig ermöglicht wird. Bei einer Ausgestaltung des Energiespeichersystems mit mehr als zwei Lagen, können die Lagen gleichmäßig oder ungleichmäßig zueinander beabstandet sein. Es kann besonders vorteilhaft sein, einen Bereich des Grades der Deformation der Deformationselemente besonders feinstufig zu erfassen, wohingegen ein anderer Bereich des Grades der Deformation der Deformationselemente weniger feinstufig erfasst werden kann. Somit würde beispielsweise eine erste Lage mit wenigstens einem Deformationselement eine initiale Kontaktierung erfassen und eine Vielzahl an weiteren Lagen eine genaue Erfassung der Deformation bei größeren äußeren Krafteinwirkungen ermöglichen. Die Deformationselemente der wenigstens zwei Lagen können übereinander und/oder zueinander versetzt angeordnet sein.

Gemäß einer bevorzugten Weiterentwicklung der Erfindung kann bei einem Energiespeichersystem vorgesehen sein, dass die Erfassungsvorrichtung wenigstens zwei Deformationselemente umfasst, wobei die wenigstens zwei Deformationselemente unterschiedliche Höhen aufweisen. Eine Ausgestaltung von wenigstens zwei Deformationselementen mit unterschiedlichen Höhen ermöglicht vorteilhaft eine Erfassung von unterschiedlichen Graden der Deformation, da für die Kontaktierung der wenigstens zwei Deformationselemente mit den wenigstens zwei unterschiedlichen Höhen unterschiedliche äußere Krafteinwirkungen erforderlich sind, um eine Kontaktierung mit dem wenigstens einen Kontaktelement zu erzeugen. Ein derart ausgestaltetes Energiespeichersystem ist besonders vorteilhaft, da eine Erfassung eines Grades einer Deformation besonders einfach und kostengünstig ermöglicht wird. Analog zu dem vorherigen Abschnitt, kann durch die Deformationselemente mit unterschiedlichen Höhen beispielsweise unterschieden werden, in welchem Detailgrad die Deformation der Deformationselemente erfasst werden soll. In einem sehr anfälligen Bereich des Energiespeichersystems für äußere Krafteinwirkungen kann beispielsweise eine Vielzahl an Deformationselementen mit unterschiedlichen Höhen angeordnet sein, um eine möglichst detailreiche Erfassung der Deformation in diesem Bereich zu ermöglichen.

Gemäß einer bevorzugten Weiterentwicklung der Erfindung kann bei einem Energiespeichersystem vorgesehen sein, dass das wenigstens eine Deformationselement mit einer Hülle ausgestaltet ist, insbesondere wobei die Hülle eine flächige oder im Wesentlichen flächige Ausgestaltung aufweist und/oder die Hülle zumindest abschnittsweise elastisch und/oder plastisch komprimierbar ist. Die Hülle des wenigstens einen Deformationselements ist bevorzugt als eine Matte ausgestaltet. Die Matte ist ferner aus einem elastisch und/oder plastisch komprimierbaren und/oder verformbaren Material. Alternativ oder zusätzlich ist die Hülle zumindest abschnittsweise aus einem schaumartigen Material ausgestaltet. Ferner kann die Hülle zumindest abschnittsweise aus Stahlwolle und/oder einer Netzstruktur ausgestaltet sein. Die Ausgestaltung der Hülle aus Stahlwolle, also einem elektrisch leitenden Material, ermöglicht vorteilhaft eine elektrische Kontaktierung des wenigstens einen Deformationselement und/oder des wenigstens einen Kontaktelements über die elektrisch leitende Hülle. Die Hülle ist bevorzugt zumindest abschnittsweise durchsichtig oder teildurchsichtig ausgestaltet. Ein derart ausgestaltetes Energiespeichersystem ermöglicht mit einfachen und kostengünstigen Mitteln eine Erfassung eines Grades einer Deformation und kann bevorzugt besonders vorteilhaft als ein Unterbodenschutz eines Kraftfahrzeugs dienen.

Gemäß einer bevorzugten Weiterentwicklung der Erfindung kann bei einem Energiespeichersystem vorgesehen sein, dass das Energiespeichersystem wenigstens zwei Deformationselemente umfasst, wobei die wenigstens zwei Deformationselemente separat jeweils mit der Erfassungsvorrichtung elektrisch leitend verbunden sind und/oder dass das Energiespeichersystem wenigstens zwei Kontaktelemente umfasst, wobei die wenigstens zwei Kontaktelemente separat jeweils mit der Erfassungsvorrichtung elektrisch leitend verbunden sind. Die wenigstens zwei Deformationselemente und/oder Kontaktelemente sind folglich nicht elektrisch leitend miteinander verbunden. Die separate Anbindung der wenigstens zwei Deformationselemente und/oder Kontaktelemente ermöglicht eine separate Erfassung des Grades der Deformation an wenigstens zwei Stellen des Energiespeichersystems. Vorteilhaft weist ein Energiespeichersystem somit eine Unterteilung in wenigstens zwei Erfassungsbereiche auf. Beispielhaft kann somit ein Energiespeichersystem mit beliebig vielen Erfassungsbereichen ausgestaltet sein, um die Genauigkeit der Erfassung des Grades der Deformation an die Bedürfnisse des Herstellers und/oder des Anwenders anzupassen. Dabei können jeweils einzelne Deformationselemente und/oder Kontaktelemente und/oder Gruppen an Deformationselementen und/oder Kontaktelementen einen Erfassungsbereich ausgestalten. Ein derart ausgestaltetes Energiespeichersystem ist besonders vorteilhaft, da mit einfachen und kostengünstigen Mitteln eine Erfassung eines Grades einer Deformation in wenigstens zwei separaten Erfassungsbereichen ermöglicht wird.

Gemäß einer bevorzugten Weiterentwicklung der Erfindung kann bei einem Energiespeichersystem vorgesehen sein, dass das wenigstens eine Deformationselement und/oder das wenigstens eine Kontaktelement an dem Grundkörper, insbesondere vollflächig oder im Wesentlichen vollflächig und/oder lösbar, angeordnet, befestigt und/oder stoffschlüssig mit dem Grundkörper ausgestaltet sind. Bevorzugt ist das Kontaktelement durch den Grundkörper stoffschlüssig ausgestaltet. Für die Erfassung der Deformation des wenigstens einen Deformationselements ist es vorteilhaft, wenn das wenigstens eine Deformationselement und/oder das wenigstens eine Kontaktelement an dem Grundkörper angeordnet ist. Eine Lösbarkeit des wenigstens einen Deformationselements und/oder des wenigstens einen Kontaktelements ist besonders vorteilhaft, da eine Wartung und/oder ein Austausch einzelner, mehrerer oder aller Deformationselemente und/oder Kontaktelemente vorteilhaft ermöglicht wird. Insbesondere ein deformiertes Deformationselement kann beispielsweise nach einer Reparatur und/oder nach einer Überprüfung gegen ein neues, nicht deformiertes Deformationselement getauscht werden, um die ursprüngliche Erfassungsgenauigkeit wiederherzustellen. Das wenigstens eine Deformationselement und/oder das wenigstens eine Kontaktelement sind an dem Grundkörper verschraubt, vernietet, verklebt und/oder anderweitig angeordnet und/oder befestigt.

Gemäß einer bevorzugten Weiterentwicklung der Erfindung kann bei einem Energiespeichersystem vorgesehen sein, dass wobei das Energiespeichersystem eine Speichereinheit umfasst, wobei die Erfassung der Deformation des Deformationselements über die Zeit durch die Speichereinheit erfassbar und speicherbar ist. Zur verbesserten Auswertung und/oder Nachverfolgung von äußeren Krafteinwirkungen auf das erfindungsgemäße Energiespeichersystem ist eine Speichereinheit besonders vorteilhaft. Die Speichereinheit ermöglicht eine Erfassung der Deformation des Deformationselements vorteilhaft über die Zeit. Ferner kann im erfindungsgemäßen Energiespeichersystem eine Ausgabeeinheit zur Ausgabe der gespeicherten Daten vorhanden sein. Das Energiespeichersystem kann eine Auswertung, einen Hinweis, eine Warnung, spezielle Modi wie beispielsweise eine Temperaturüberwachung der Speichervorrichtung während der Fahrt und/oder im Stillstand und/oder ein Verbot der Weiterfahrt aufgrund einer erkannten Deformation ermöglichen. Vorzugsweise weist das Energiespeichersystem eine Sendevorrichtung auf zum Senden und/oder zur Weitergabe von den erfassten und gespeicherten Daten. Das Senden und/oder die Weitergabe kann kabellos und/oder kabelgebunden erfolgen. Ein derart ausgestaltetes Energiespeichersystem ist besonders vorteilhaft, da die Erfassung eines Grades der Deformation des wenigstens einen Deformationselements besonders vorteilhaft und vielfältig genutzt und ausgewertet wird und somit dem Hersteller, Servicebetrieb und/oder Anwender des Energiespeichersystems, insbesondere des Kraftfahrzeugs, mit dem erfindungsgemäßen Energiespeichersystem, einen vergrößerten Vorteil bietet.

Gemäß einer bevorzugten Weiterentwicklung der Erfindung kann bei einem Energiespeichersystem vorgesehen sein, dass das Deformationselement wenigstens eine, bevorzugt wenigstens zwei der folgenden Formen umfasst:
- Kegel,
- Stift,
- Zylinder,
- Hohlzylinder,
- Prisma,
- Pyramide,
- Kugel,
- Halbkugel,
insbesondere, wobei die wenigstens zwei Formen aus einem Material oder aus wenigstens zwei oder mehr unterschiedlichen Materialien ausgestaltet sind. Eine Kegelform ist beispielhaft für das wenigstens eine Deformationselement besonders vorteilhaft, da die Spitze und die sich verjüngende Ausgestaltung des Kegels eine vorteilhafte Verformung bei einer äußeren Krafteinwirkung und einer Kontaktierung mit dem wenigstens einen Kontaktelement ermöglicht. Eine Ausgestaltung des wenigstens einen Deformationselements mit wenigstens zwei der zuvor genannten Formen ist beispielsweise als ein Kegel mit einer Kugel an der Spitze des Kegels zu verstehen. Ein derart ausgestaltetes Energiespeichersystem ist besonders vorteilhaft, da die Deformation des wenigstens einen Deformationselements vorteilhaft durch die konstruktive Ausgestaltung des wenigstens einen Deformationselements angepasst werden kann. Die wenigstens zwei zuvor genannten Formen sind bevorzugt stoffschlüssig miteinander zu jeweils einem Deformationselement aus einem Material oder aus wenigstens zwei unterschiedlichen Materialien ausgestaltet.

Gemäß einem zweiten Aspekt der Erfindung wird die Aufgabe durch ein Kraftfahrzeug mit einem Energiespeichersystem gemäß dem ersten Aspekt gelöst. Bei dem beschriebenen Kraftfahrzeug ergeben sich sämtliche Vorteile, die bereits zu dem Energiespeichersystem gemäß dem ersten Aspekt der Erfindung beschrieben worden sind. Ein derart ausgestaltetes Kraftfahrzeug ist besonders vorteilhaft, da die Erfassung des Grades der Deformation des wenigstens einen Deformationselements des Energiespeichersystems stufenlosen oder im Wesentlichen stufenlos besonders einfach und kostengünstig ermöglicht wird.

Ein erfindungsgemäßes Energiespeichersystem sowie ein erfindungsgemäßes Kraftfahrzeug werden nachfolgend anhand von Zeichnungen näher erläutert. Es zeigen jeweils schematisch:
- Figur 1: in einer Seitenansicht ein Energiespeichersystem mit einem deformierten Deformationselement,
- Figur 2: in einer Seitenansicht ein Energiespeichersystem mit Deformationselementen in zwei Lagen und mit zwei unterschiedlichen Höhen,
- Figur 3: in einer Seitenansicht ein Energiespeichersystem mit einem deformierten Deformationselement, und
- Figur 4: in einer Seitenansicht ein Kraftfahrzeug mit einem Energiespeichersystem.

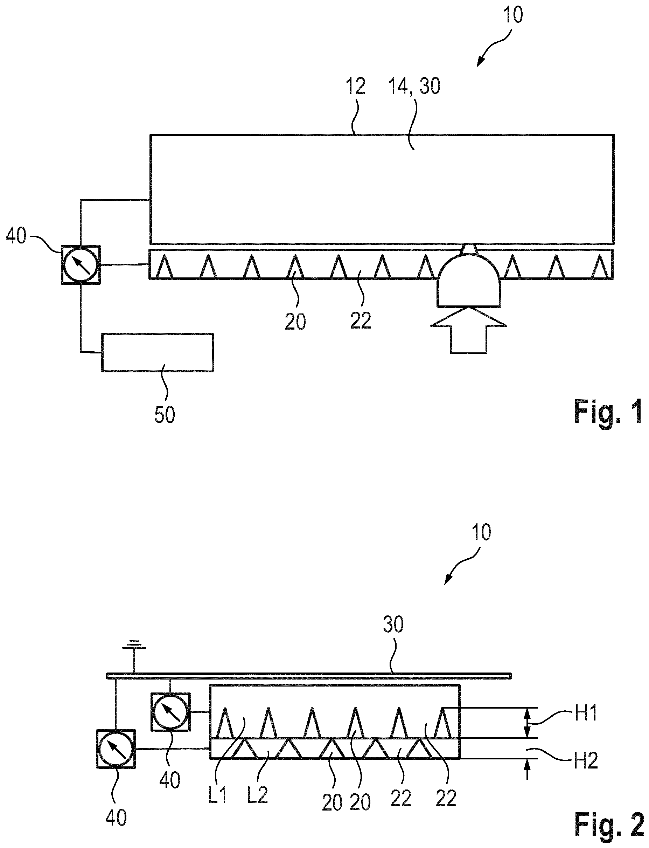

Elemente mit gleicher Funktion und Wirkungsweise sind in den Fig. 1 bis 4 jeweils mit denselben Bezugszeichen versehen.

In Fig. 1 ist schematisch in einer Seitenansicht ein Energiespeichersystem 10 mit einem deformierten Deformationselement 20 gezeigt. Das Energiespeichersystem 10 umfasst eine Speichervorrichtung 12 zur Speicherung von elektrischer Energie, einen Grundkörper 14 zur Aufnahme von der Speichervorrichtung 12, der ebenfalls als Kontaktelement 30 dient, eine Vielzahl an Deformationselementen 20 in einer Ebene und eine Erfassungsvorrichtung 40 zur Erfassung einer Deformation der Deformationselemente 20. Die Deformationselemente 20 sind als Kegel ausgestaltet und zeigen verjüngend zu dem als Grundkörper 14 ausgestalteten Kontaktelement 30. Die Erfassungsvorrichtung 40 ist elektrisch leitend mit den Deformationselementen 20 und dem Kontaktelement 30 verbunden und zur Erfassung eines Grades der Deformation der Deformationselemente 20 ausgestaltet. Der Grad der Deformation der Deformationselemente 20 ist bei einer Kontaktierung zwischen den Deformationselementen 20 und dem Kontaktelement 30 mit einer Erfassung eines elektrischen Widerstands durch die Erfassungsvorrichtung 40 erfassbar. Eines der Deformationselemente 20 ist durch eine äußere Krafteinwirkung deformiert und stellt besagten Kontakt zu dem Kontaktelement 30 her. Das Kontaktelement 30 und die Deformationselemente 20 kontaktieren sich im Grundzustand nicht. Die Deformation des Deformationselements 20 erlaubt eine Schlussfolgerung auf die äußere Krafteinwirkung. Je nach Größe der äußeren Krafteinwirkung wird das Deformationselement 20 ab einer Kontaktierung mit dem Kontaktelement 30 mehr oder weniger deformiert und verändert dabei die Kontaktierungsfläche und somit den elektrischen Widerstand des Übergangs zwischen dem Kontaktelement 30 und dem Deformationselement 20. Ein derart ausgestaltetes Energiespeichersystem 10 ist besonders vorteilhaft, da die Erfassung des Grades der Deformation des Deformationselements 20 stufenlosen oder im Wesentlichen stufenlos besonders einfach und kostengünstig ermöglicht wird. Die Deformationselemente 20 sind mit einer Hülle 22 ausgestaltet, wobei die Hülle 22 eine flächige Ausgestaltung aufweist und zumindest abschnittsweise elastisch plastisch komprimierbar ist. Das Energiespeichersystem 10 umfasst eine Speichereinheit 50, wobei die Erfassung der Deformation des Deformationselements 20 über die Zeit durch die Speichereinheit 50 erfassbar und speicherbar ist.

In Fig. 2 ist schematisch in einer Seitenansicht ein Energiespeichersystem 10 mit Deformationselementen 20 in zwei Lagen L1, L2 und mit zwei unterschiedlichen Höhen H1, H2 gezeigt. Eine Anordnung von Deformationselementen 20 in zwei Lagen L1, L2 ermöglicht vorteilhaft eine Erfassung von unterschiedlichen Graden der Deformation, da für die Kontaktierung der Deformationselemente 20 in den zwei Lagen L1, L2 unterschiedliche äußere Krafteinwirkungen erforderlich sind, um eine Kontaktierung mit dem Kontaktelement 30 zu erzeugen. Die Deformationselemente 20 der zwei Lagen L1, L2 sind jeweils mit einer separaten Erfassungsvorrichtung 40 verbunden, sodass eine Erfassung des Grades der Deformation von den Deformationselementen 20 der zwei Lagen L1, L2 separat voneinander möglich ist. Die Deformationselemente 20 der zwei Lagen L1, L2 weisen unterschiedliche Höhen H1, H2 auf. Eine Ausgestaltung von Deformationselementen 20 mit unterschiedlichen Höhen H1, H2 ermöglicht vorteilhaft eine Erfassung von unterschiedlichen Graden der Deformation, da für die Kontaktierung der Deformationselemente 20 mit den wenigstens zwei unterschiedlichen Höhen H1, H2 unterschiedliche äußere Krafteinwirkungen erforderlich sind, um eine Kontaktierung mit dem Kontaktelement 30 zu erzeugen. Die Deformationselemente 20 der zwei Lagen L1, L2 sind zueinander versetzt angeordnet.

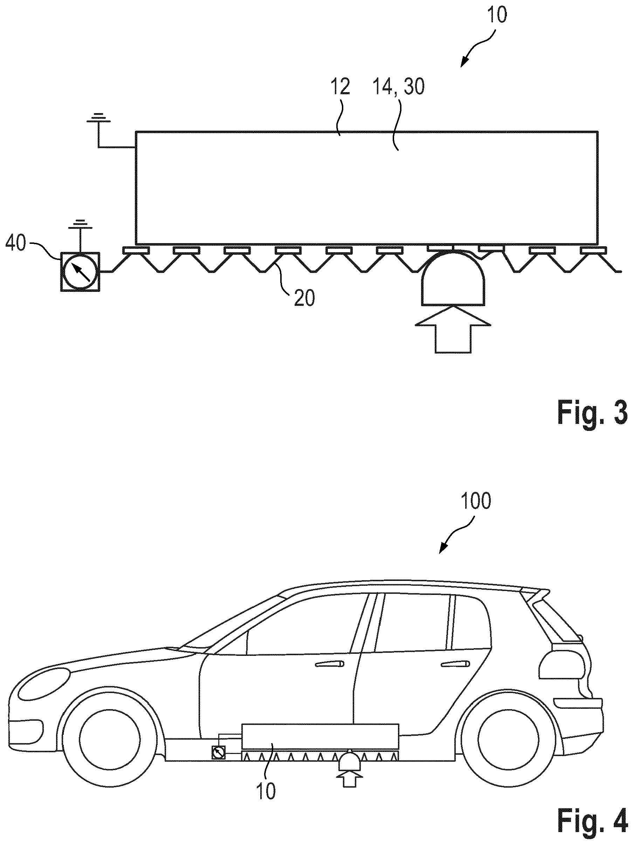

In Fig. 3 ist schematisch in einer Seitenansicht ein Energiespeichersystem 10 mit einem deformierten Deformationselement 20 gezeigt. Das Energiespeichersystem 10 der Fig. 3 weist eine Erfassungsvorrichtung 40 auf, die mit dem Deformationselement 20 elektrisch leitend verbunden und zur Erfassung eines Grades der Deformation des Deformationselementes 20 ausgestaltet ist. Das Deformationselement 20 ist als einstückiges Deformationselement 20 ausgestaltet und erstreckt sich entlang einer kompletten Seite der Speichervorrichtung 12 und des Grundkörpers 14. Das Deformationselement 20 ist im Grundzustand von dem Kontaktelement 30 elektrisch isoliert. Durch die Einwirkung einer äußeren Kraft wird das Deformationselement 20 zumindest abschnittsweise durch die elektrische Isolierung gedrückt und eine Kontaktierung zwischen dem Deformationselement 20 und dem Kontaktelement 30 erzeugt. Mittels einer elektrischen Widerstandserfassung durch die Erfassungsvorrichtung 40 wird ein Grad der Deformation des Deformationselements 20 erfasst und damit ein Indikator für eine mögliche Beschädigung des Energiespeichersystem 10, insbesondere der Speichervorrichtung 12, ermittelt.

In Fig. 4 ist schematisch in einer Seitenansicht ein Kraftfahrzeug 100 mit einem Energiespeichersystem 10 gezeigt. Eine erfindungsgemäßes Kraftfahrzeug 100 ist besonders vorteilhaft, da die Erfassung des Grades der Deformation der Deformationselemente 20 des Energiespeichersystems 10 stufenlosen oder im Wesentlichen stufenlos besonders einfach und kostengünstig ermöglicht wird.

### Bezugszeichenliste

- 10: Energiespeichersystem
- 12: Speichervorrichtung
- 14: Grundkörper

- 20: Deformationselement
- 22: Hülle

- 30: Kontaktelement

- 40: Erfassungsvorrichtung

- 50: Speichereinheit

- 100: Kraftfahrzeug

- H: Höhe
- L: Lage

## Patentansprüche

1. Energiespeichersystem (10), umfassend wenigstens eine Speichervorrichtung (12) zur Speicherung von elektrischer Energie, einen Grundkörper (14) zur Aufnahme von der wenigstens einen Speichervorrichtung (12), wenigstens ein Deformationselement (20), wenigstens ein Kontaktelement (30) und eine Erfassungsvorrichtung (40) zur Erfassung einer Deformation des wenigstens einen Deformationselements (20), wobei das wenigstens eine Deformationselement (20) und das wenigstens ein Kontaktelement (30) zumindest bereichsweise gemeinsam an einer Außenseite des Grundkörpers (14) angeordnet sind,
**dadurch gekennzeichnet,**
**dass** die Erfassungsvorrichtung (40) elektrisch leitend mit dem wenigstens einen Deformationselement (20) und/oder dem wenigstens einen Kontaktelement (30) verbunden und zur Erfassung eines Grades der Deformation des wenigstens einen Deformationselements (20) ausgestaltet ist, wobei der Grad der Deformation des wenigstens einen Deformationselements (20) bei einer Kontaktierung zwischen dem wenigstens einen Deformationselement (20) und dem wenigstens einen Kontaktelement (30) mit einer Erfassung eines elektrischen Widerstands durch die Erfassungsvorrichtung (40) erfassbar ist.

2. Energiespeichersystem (10) nach Anspruch 1,
**dadurch gekennzeichnet,**
**dass** die Erfassungsvorrichtung (40) zur strombasierten und/oder zur spannungsbasierten Erfassung der Deformation des Deformationselements (20) und/oder Widerstandserfassung ausgestaltet ist.

3. Energiespeichersystem (10) nach einem der vorangehenden Ansprüche,
**dadurch gekennzeichnet,**
**dass** die Erfassungsvorrichtung (10) wenigstens zwei Deformationselemente (20) umfasst, wobei die wenigstens zwei Deformationselemente (20) in wenigstens zwei Lagen (L) angeordnet sind.

4. Energiespeichersystem (10) nach einem der vorangehenden Ansprüche,
**dadurch gekennzeichnet,**
**dass** die Erfassungsvorrichtung (10) wenigstens zwei Deformationselemente (20) umfasst, wobei die wenigstens zwei Deformationselemente (20) unterschiedliche Höhen (H) aufweisen.

5. Energiespeichersystem (10) nach einem der vorangehenden Ansprüche,
**dadurch gekennzeichnet,**
**dass** das wenigstens eine Deformationselement (20) mit einer Hülle (22) ausgestaltet ist, insbesondere wobei die Hülle (22) eine flächige Ausgestaltung aufweist und/oder die Hülle (22) zumindest abschnittsweise elastisch und/oder plastisch komprimierbar ist.

6. Energiespeichersystem (10) nach einem der vorangehenden Ansprüche,
**dadurch gekennzeichnet,**
**dass** das Energiespeichersystem (10) wenigstens zwei Deformationselemente (20) umfasst, wobei die wenigstens zwei Deformationselemente (20) separat jeweils mit der Erfassungsvorrichtung (40) elektrisch leitend verbunden sind und/oder dass das Energiespeichersystem (10) wenigstens zwei Kontaktelemente (30) umfasst, wobei die wenigstens zwei Kontaktelemente (30) separat jeweils mit der Erfassungsvorrichtung (40) elektrisch leitend verbunden sind.

7. Energiespeichersystem (10) nach einem der vorangehenden Ansprüche,
**dadurch gekennzeichnet,**
**dass** das wenigstens eine Deformationselement (20) und/oder das wenigstens eine Kontaktelement (30) an dem Grundkörper (14), insbesondere vollflächig und/oder lösbar, angeordnet, befestigt und/oder stoffschlüssig mit dem Grundkörper (14) ausgestaltet sind.

8. Energiespeichersystem (10) nach einem der vorangehenden Ansprüche,
**dadurch gekennzeichnet,**
**dass** das Energiespeichersystem (10) eine Speichereinheit (50) umfasst, wobei die Erfassung der Deformation des Deformationselements (20) über die Zeit durch die Speichereinheit (50) erfassbar und speicherbar ist.

9. Energiespeichersystem (10) nach einem der vorangehenden Ansprüche,
**dadurch gekennzeichnet,**
**dass** das Deformationselement (20) wenigstens eine, bevorzugt wenigstens zwei der folgenden Formen umfasst:
- Kegel,
- Stift,
- Zylinder,
- Hohlzylinder,
- Prisma,
- Pyramide,
- Kugel,
- Halbkugel,
insbesondere, wobei die wenigstens zwei Formen aus einem Material oder aus zwei unterschiedlichen Materialien ausgestaltet sind.

10. Kraftfahrzeug (100) mit einem Energiespeichersystem (10),
**dadurch gekennzeichnet,**
**dass** das Energiespeichersystem (10) nach einem der vorangehenden Ansprüche ausgestaltet ist.
